# EUROPEAN PATENT APPLICATION

(11) **EP 4 646 934 A1**
(43) Date of publication of application: **12.11.2025**
(21) Application number: 24750188.5
(22) Date of filing: 29.01.2024
(51) Int. Cl.: A21D 8/02, A21D 2/34, A21D 2/36, A21D 13/80

(54) **DOUGH OR FOOD PRODUCT OBTAINED BY BAKING SAID DOUGH, AND METHOD FOR MANUFACTURING SAME**

(30) Priority: 30.01.2023 JP 2023012079
(71) Applicant: TableMark Co., Ltd., Tokyo 104-0045 (JP)
(72) Inventor: KAWASAKI, Chie, Tokyo 144-0042 (JP); ARAKI, Junya, Tokyo 144-0042 (JP); ADO, Ryutaro, Tokyo 144-0042 (JP)
(74) Representative: Isarpatent
(86) International application number: PCT/JP2024/002606
(87) International publication number: WO 2024/162239

(57) **Abstract**

Provided is a food product that does not use eggs. Provided is a delicious food product which has good texture and in which the foamability of eggs and air bubble stabilization function are sufficiently replaced. Provided is a method for manufacturing batter or a food product obtained by baking the same, the method comprising: a step for obtaining an air bubble-containing substance by performing mixing a raw material A, containing plant-based or animal-based milk or a processed product thereof so to cause the raw material A to contain gas; and a step for obtaining batter by mixing a raw material B to the air bubble-containing substance, wherein at least one among the raw material A and the raw material B contains an effective amount of cell structure material for maintaining air bubbles.

## Description

### Technical Field

The present invention relates to batter or a food product obtained by baking the batter, and a method for manufacturing same.

Sponge cake is usually made from eggs, sugar, and wheat flour as the main raw materials. Such sponge cake is produced by pouring batter, which is obtained by mixing flour such as wheat flour into whipped sugar-added eggs, into a cake mold, and then baking the batter. Recently, sponge cakes, in which eggs are not used, have been developed to deal with issues such as allergies. For example, Patent Document 1 describes a soy protein-containing confectionery batter as a wheat-, milk-, and egg-free, sponge cake-like batter, which comprises a soy protein with a soy protein content of 50 % or more by weight, which is any one, or two or more, selected from an isolated soy protein, a concentrated soy protein, and adjusted soy milk powder, a starch-containing material other than wheat, and oil and fat, wherein the soy protein-containing confectionery batter is characterized in that the soy protein content in the soy protein-containing confectionery batter is in the range of 0.7% to 12% by weight and the specific gravity of the soy protein-containing confectionery batter is 0.44 to 0.81. In addition, Patent Document 2 describes baked sweets that do not contain eggs, milk, wheat flour or ingredients derived from these, wherein the baked sweets are obtained by baking batter that contains rice flour, and 30 to 180 parts by mass of sugars, 60 to 390 parts by mass of soy milk, and 2 to 90 parts by mass of foaming oil and fat, with respect to 100 parts by mass of the rice flour. Patent Document 3 describes a bubble-containing food product with a moist and fluffy texture like sponge cakes or castella cakes, in which food materials derived from wheat flour, eggs and cow's milk are not used, wherein the bubble-containing food product is characterized in that it is made by heating and swelling batter that uniformly contains 150 to 250 parts by weight of rice flour, 3 to 15 parts by weight of baking powder, 10 to 90 parts by weight of plant-based oil and fat, 40 to 100 parts by weight of sugar, and 60 to 150 parts by weight of water, in a composition ratio where the plant-based oil and fat is within the range of 10% to 100% by weight of the sugar. Patent Document 4 describes a method for manufacturing a sponge batter that does not contain wheat, eggs or milk, but contains hydroxypropylmethyl cellulose, flour, and a liquid raw material, wherein the method for manufacturing a sponge batter is characterized in that it comprises: (1) a step of mixing and foaming a liquid raw material that contains hydroxypropylmethyl cellulose, soy milk, and oil and fat, but does not contain sugars; (2) a step of dissolving sugars in soy milk and oil and fat, and then mixing and foaming a resulting liquid raw material that does not contain hydroxypropylmethyl cellulose; (3) a step of mixing a foaming body obtained by (1) and a foaming body obtained by (2); and (4) a step of stirring and mixing a foaming body obtained by (3) and flour containing rice flour. Moreover, Patent Document 5 provides a method for manufacturing a baked meringue-like food product with good appearance and good food texture without using any egg white at all, wherein the methods comprises a step of mixing soy milk and sugars to a specific gravity of 0.1 to 0.5, and a step of molding and then baking and heating batter obtained by adding an edible powder to the mixture and mixing a resulting mixture to a specific gravity of 0.2 to 0.6.

On the other hand, Patent Document 6 describes a method for manufacturing a sponge-like soy pulp *(okara)* cake, which is healthy by using only soy pulp *(okara)* instead of conventional wheat flour and starch, and which is delicious by being baked so as to have fluffy and fine texture, wherein the method is characterized in that it comprises adding 100 parts by weight of dry soy pulp *(okara)* powder in 300 to 500 parts by weight of whipped fluid egg, mixing a resulting mixture to obtain a fluid mixture, and then pouring the fluid mixture into a mold, followed by baking it.

### Prior Art Documents

### Patent Documents

Patent Document 1: Japanese Patent Publication No. 3-224458 (Japanese Patent No. 2598711)
Patent Document 2: Japanese Patent Publication No. 2006-61029 (Japanese Patent No. 4492255)
Patent Document 3: Japanese Patent Publication No. 2006-230348
Patent Document 4: Japanese Patent Publication No. 2014-113070
Patent Document 5: Japanese Patent Publication No. 2017-209025 (Japanese Patent No. 6829949)
Patent Document 6: Japanese Patent Publication No. 2021-132579

### Summary of Invention

### Problems to be solved by the invention

Food products, in which eggs are not used, are desirable for people with egg allergies or for vegans. There are also assumed cases wherein eggs are avoided in order to reduce calories or eggs cannot be used due to the influence of avian influenza or rising raw material costs or others. For this reason, the technique of replacing eggs with other materials is widely desired.

In general, the protein contained in eggs, together with fat, forms an air bubble membrane and expresses foamability capable of trapping air and a function of stabilizing the air bubbles, and thus, this protein is useful for forming batter that contains a lot of air bubbles. Thus, conventional egg-free food products, in which the above-described role of eggs is not sufficiently replaced by other materials, do not adequately maintain the air bubble structure and consequently have poor food texture. It could not be said that the conventional egg-free food products can be determined to be delicious by consumers.

### Solution to Problem

The present inventors have found that air bubbles can be stabilized in batter by adding specific raw materials such as bean pulp to an air bubble-containing mixture of raw materials, without using eggs, and that a food product having a good air bubble-containing structure and good food texture can be manufactured by baking such batter, even though eggs are not used, thereby completing the present invention.

The present invention provides the following.
[1] A method for manufacturing batter or a food product obtained by baking the batter, the method comprising:
   a step for obtaining an air bubble-containing substance by performing mixing a raw material A containing plant-based or animal-based milk or a processed product thereof so to cause the raw material A to contain gas; and
   a step for obtaining batter by mixing a raw material B to the resulting air bubble-containing substance,
   wherein at least one among the raw material A and the raw material B contains an effective amount of cell structure material for maintaining the air bubbles.
[2] The manufacturing method according to 1, wherein the raw material A contains the effective amount of cell structure material for maintaining air bubbles.
[3] The manufacturing method according to 1 or 2, wherein the milk or a processed product thereof is one or more selected from the group consisting of cow's milk, almond milk, rice milk, coconut milk, oat milk, and bean milk.
[4] The manufacturing method according to any one of 1 to 3, wherein the milk or a processed product thereof contains bean milk or cow's milk.
[5] The manufacturing method according to any one of 1 to 4, wherein the milk or a processed product thereof is bean milk produced from one or more selected from the group consisting of soybeans, peas, kidney beans, chickpeas, and adzuki beans.
[6] The manufacturing method according to any one of 1 to 5, wherein the milk or a processed product thereof contains a protein having air bubble stability.
[7] The manufacturing method according to any one of 1 to 6, wherein the cell structure material is one or more selected from the group consisting of bean pulp bran, rice bran, and fruit fiber.
[8] The manufacturing method according to any one of 1 to 7, wherein the cell structure material is bean pulp produced from one or more selected from the group consisting of soybeans, peas, kidney beans, chickpeas and adzuki beans.
[9] The manufacturing method according to any one of 1 to 8, wherein the cell structure material is bran produced from one or more selected from the group consisting of wheat, barley, and oats.
[10] The manufacturing method according to any one of 1 to 9, wherein the batter contains 1.4% to 6.4% of the cell structure material.
[11] The manufacturing method according to any one of 1 to 10, wherein the raw material A contains emulsified oil and fat.
[12] The manufacturing method according to any one of 1 to 11, wherein the step of obtaining the air bubble-containing substance is performed by mixing high pressure gas with the raw material A.
[13] The manufacturing method according to any one of 1 to 12, wherein the raw material A contains sugars.
[14] The manufacturing method according to any one of 1 to 13, wherein the raw material B contains one or more selected from the group consisting of grain flour and starch.
[15] The manufacturing method according to any one of 1to 14, wherein the raw material B contains one or more selected from the group consisting of wheat flour, rice flour, soy flour, barley flour, and corn flour.
[16] The manufacturing method according to any one of 1 to 15, wherein the raw material B contains a leavening agent.
[17] The manufacturing method according to any one of 1 to 16, wherein a specific gravity of the resulting air bubble-containing substance is 0.2 to 0.6.
[18] The manufacturing method according to any one of 1to 17, wherein the specific gravity of the obtained batter is 0.3 to 0.8.
[19] Batter or a food product obtained by baking the batter, containing an effective amount of cell structure material for maintaining air bubbles, obtained by a manufacturing method comprising:
   a step for obtaining an air bubble-containing substance by performing mixing a raw material A containing plant-based or animal-based milk or a processed product thereof so to cause the raw material A to contain gas; and
   a step for obtaining batter by mixing a raw material B to the resulting air bubble-containing substance.
[20] Batter, or a baked food product having uniform air bubbles obtained by baking the batter, which contains:
   plant-based or animal-based milk or a processed product thereof,
   cell structure material,
   sugars,
   flour, and
   emulsified oil and fat.
[21] The batter or the food product obtained by baking the batter according to 19 or 20, wherein
   the milk or a processed product thereof is bean milk or cow's milk,
   the cell structure material is one or more selected from the group consisting of bean pulp, bran, rice bran, and fruit fiber, and
   the batter or the food product does not contain eggs.

### Brief Description of Drawings

[Fig. 1] Cross-sectional photographs of sponge cakes obtained by baking batters prepared with different amounts of soy pulp *(okara)* powders and different timings of adding soy pulp *(okara)* powders (at the time of manufacturing meringue-like preparations (A) or at the time of adding powder raw material (B)) (see Test Example 2).
[Fig. 2] Cross-sectional photographs of sponge cakes. The upper and lower parts, excluding baked parts (brown colored parts) were observed (see Test Example 3). The width of the sponge cake was 12 cm.
[Fig. 3] Photographs of the upper part and lower part of the cross section of each sponge cake.

### Description of Embodiments

In relation to the present invention, the symbol "%" means % by weight, unless otherwise stated. In relation to the present invention, when referring to the specific gravity of a subject (e.g., batter, or a mixture of raw materials including the after-mentioned air bubble-containing material as a typical example), it means % by weight per 100 ml of the subject, unless otherwise stated. For example, when 100 ml of a weighed batter has a weight of 50 g, the specific gravity of the batter is 0.5. In relation to the present invention, a numerical range of X to Y includes the values X and Y at both ends, unless otherwise stated. In relation to the present invention, the term "batter" means one obtained by mixing and stirring raw materials. As necessary, such batter is poured into a mold and the like and is then molded, and it is then baked, so that a food product can be manufactured.

The present invention relates to a method for manufacturing batter or a food product obtained by baking the batter, wherein the method comprises the following steps:
a step for obtaining an air bubble-containing substance by performing mixing a raw material A containing plant-based or animal-based milk or a processed product thereof so to cause the raw material A to contain gas; and
a step for obtaining batter by mixing a raw material B to the resulting air bubble-containing substance.

### [Raw materials]

### (Milk or processed product thereof)

In one aspect, the raw materials include milk or a processed product thereof. In general, the structure of air bubbles in whipped cream is considered to be a three-dimensional structure comprising air bubbles, fat globules and free fat, and the air bubble membrane is said to be comprised of proteins (Review: Foamability of Cream, Masayuki Noda, Oil Chemistry 42(10), 784-791, 1993). Thus, in order to prepare air bubble-containing batter, it is thought that milk ingredients which contain proteins capable of constituting the air bubble membrane are important. Therefore, the milk or a processed product thereof can be used without any particular restrictions, as long as it contains proteins capable of constituting the air bubble membrane. It is preferable that the proteins capable of constituting the air bubble membrane are contained in large amounts.

The milk or a processed product thereof may be plant-based or animal-based. Examples of the plant-based milk may include bean milk, almond milk, rice milk, coconut milk, oat milk, and the like. In addition, the type of beans that are raw materials of bean milk is not particularly limited, and any one type selected from the group consisting of soybeans, peas, kidney beans, chickpeas, and adzuki beans may be used alone or in combination of multiple types. Examples of the animal-based milk may include cow's milk, goat milk, and the like. Examples of the processed milk products may include cream, skim milk, and a mixture thereof. A preferred example of the milk or a processed product thereof is plant-based milk, and a particularly preferred example is soy milk.

The milk or a processed product thereof may be either a liquid or a solid (e.g., a dried product of liquid, or powder). As the milk or a processed product thereof, any one type may be used alone or in combination of multiple types. From the viewpoint of reducing the flavor (unpleasant flavor) of each ingredient, the milk or a processed product thereof is preferably used in combination.

The amount of the milk or a processed product thereof (when multiple types are used, it refers to the total amount) can be set, as appropriate, by those skilled in the art, but for example, the amount of a liquid containing 6.1% or more protein (for example, soy milk, and a liquid prepared from soy milk powders, as necessary, by being mixed with water) relative to the total amount of batter (total amount of raw materials) is, for example, 40% to 60%, preferably 42% to 58%, more preferably 43% to 56%, and further preferably 43% to 55%. When a solid is used, the amount can be set to the above-mentioned amount, in a dissolved state in water or the like where the concentration of protein becomes the above-mentioned concentration.

In one aspect, the milk or a processed product thereof is contained in a raw material A, and the milk or a processed product thereof is added during the step for obtaining an air bubble-containing substance by performing mixing so as to allow gas to be contained. In relation to the present invention, the raw material added during the step for obtaining an air bubble-containing substance by performing mixing so as to allow gas to be contained is referred to as "raw material A," and raw materials added during the subsequent step for obtaining batter by further mixing other raw materials into the resulting air bubble-containing substance, is referred to as "raw material B."

### (Cell structure material)

The raw materials contain an effective amount of cell structure material for maintaining air bubbles. The cell structure material is a part of cell tissues that are mainly derived from plants and are almost insoluble in water. Typically, the cell structure material means a part which maintains, to some extent, a part formed with the cell wall as a skeleton. The cell structure material can be obtained as a residue from cellular materials after dissolving the water-soluble components in water and performing treatment such as squeezing. The cell structure material contributes to maintaining the structure of air bubbles. Specifically, the cell structure material maintains a structure which contains air bubbles in air bubble-containing batter during baking, resulting in good fire-out and a porous state after baking.

Examples of the cell structure material may mainly include bean pulp, bran, rice bran, fiber, and microbial cell body that remain after extracting water-soluble components from the cell tissues of beans or grains, and plants such as fruits, wood, bamboo, vegetables, potatoes, and seeds and nuts, and fungi such as yeast and mold. More specific examples may include extraction residues of plant milk such as soy pulp (okara), peas pulp, wheat bran, oat fiber, rice bran, fruit fiber (e.g. apple fiber), and seeds and nuts, and yeast cell body. In one preferred embodiment, the cell structure material is plant-based, specifically, soy pulp (okara), peas pulp, wheat bran, oat fiber, rice bran, and fruit fiber (e.g. apple fiber).

Bean pulp can be manufactured by soaking beans in water, grinding them with addition of water, then heating them, and then filtrating the resulting them. The type of raw material beans is not particularly limited, and in addition to soy pulp (okara) generated during the manufacture of *tofu*, etc., other beans such as peas, kidney beans, chickpeas, adzuki beans, mung beans, lentils, fava beans, and peanuts can be used similarly to manufacture the bean pulp.

Bran refers to outer layer portion of grains. The type of grains is not limited, and wheat, barley, oats, etc. can be used. Among them, wheat bran is obtained as a residue when endosperm is removed from wheat grains in the general wheat flour manufacturing process, and it is also referred to as wheat bran.

Oat fiber refers to an insoluble fiber portion obtained from the outer layer portion of what is called oats, by removing water-soluble components such as water-soluble fibers. It is also referred to as oat wheat bran or oat bran (see Japanese Patent Publication No. 2015-231350).

Rice bran refers to a pericarp, a seed coat, and an aleurone layer potion obtained when brown rice is polished.

Fruit fiber refers to dietary fiber materials from fruits such as apples and oranges, which contain hardly-water-soluble dietary fiber components that are structure materials of cell tissues other than water-soluble dietary fiber such as pectin. An example of fruit fiber is apple fiber.

As such cell structure material, any one type may be used alone, or multiple types may be used in combination.

The amount of the cell structure material (which indicates the total amount, when multiple types are used) is adequate if it is an amount effective for maintaining air bubbles, and the amount of the cell structure material can be set, as appropriate, by those skilled in the art. For example, 1.4% to 6.4% of the cell structure material can be contained in the total amount of the batter (the total amount of raw materials).

The plant tissue structure may be mixed in any step, as long as the effect of stabilizing gas is exhibited. In one aspect, the cell structure material is added during the step for obtaining an air bubble-containing substance by performing mixing so as to allow gas to be contained; that is to say, the cell structure material is contained in the raw material A. In another aspect, the cell structure material is added during the step for obtaining batter by further mixing the air bubble-containing substance with other raw materials; that is to say, the cell structure material is contained in the raw material B.

The amount of the cell structure material may be changed depending on whether the cell structure material is contained in the raw material A or the raw material B. When the cell structure material is contained in the raw material A, the cell structure material may be set to be 1.3% or more of the total amount of the batter (the total amount of raw materials), preferably 1.4% or more, and more preferably 1.5% or more, and it may also be set to be 2.6% or more. The upper limit value may be set to be, for example, 7.7% or less, preferably 6.5% or less, and more preferably 5.2% or less. From the viewpoint of emphasizing softness, it may be set to be 3.9% or less. When the cell structure material is contained in the raw material A, it is preferable in the point that air bubbles can be observed both in the upper part (the upper half part of the vertical cross section at the center of a food product) and in the lower part (the lower half part thereof) in the food product obtained by baking the resulting batter. When the cell structure material is contained in the raw material B, the cell structure material may be set to be 1.4% or more of the total amount of the batter (the total amount of raw materials), and preferably 2.6% or more. The upper limit value may be set to be, for example, 6.4% or less, and preferably 5.2% or less.

### (Sugars)

The raw materials may include sugars. In relation to the present invention, sugars refer to any selected from monosaccharides, disaccharides, oligosaccharides and sugar alcohols, unless otherwise stated. Sugars give an appropriate viscosity to the mixture of raw materials and promote foaming, and also, sugars act to stabilize air bubbles.

Examples of the sugars may include glucose, fructose, galactose, sucrose (saccharose), trehalose, maltose, lactose, maltooligosaccharides, lactosucrose, maltitol, sorbitol, xylitol, and the like. Preferred examples may include disaccharides and sugar alcohols, and specific examples thereof may include sucrose, trehalose, maltose, maltitol, and sorbitol.

A particularly preferred example of the sugars used is sucrose. Examples of the sucrose may include refined white sugar, granulated sugar, white coarse sugar, brown sugar, medium coarse sugar, liquid sugar, beet sugar, cane sugar, brown sugar, and the like. As for sugars, any one type may be used alone, or multiple types may be used in combination.

The amount of sugars (which indicates the total amount, when multiple types are used) can be set, as appropriate, by those skilled in the art, and it is, for example, 10% to 25%, preferably 12% to 20%, more preferably 14% to 19%, and further preferably 15% to 18%, with respect to the total amount of the batter (the total amount of raw materials).

In one aspect, the sugars are added during the step for obtaining an air bubble-containing substance by performing mixing so as to allow gas to be contained; that is to say, the sugars are contained in the raw material A.

### (Flour)

The raw materials include flour. The Flour includes bean flour, grain flour, and starch.

Examples of raw materials for the bean flour may include soybeans, kidney beans, peas, chickpeas, adzuki beans, broad beans, lentils, peanuts, and the like. Examples of raw materials for the grain flour may include wheat, rye, barley, oats (also called *enbaku* or oat wheat), triticale, pearl barley, buckwheat, corn, rice, foxtail millet, barnyard millet, and the like. As such flour, any one type of flour obtained from these raw materials may be used alone, or multiple types may be used in combination.

When any one selected from the group consisting of bean flour and grain flour is used as flour, preferred examples may include flours other than wheat flour, such as soy flour, rice flour, and corn flour. Another preferred example of the flour is wheat flour.

The flour may include starch. The starch is not particularly limited, as long as it is a starch that is generally used for food. Examples of the starch that can be used herein may include wheat starch, rice starch, potato starch, sweet potato starch, corn starch, waxy corn starch, tapioca starch, sago starch, starches obtained by physically processing these starches, and processed starches thereof.

Examples of the processed starch may include oxidized starch, etherified starch, esterified starch, pregelatinized starch, acid-treated starch, crosslinked starch, and starch processed with oil and fat. The oxidized starch is starch that has been treated with an oxidizing agent, and examples thereof may include acetate starch, acetylated acetate starch, and the like. The type of starch that can be used as a raw material for the oxidized starch is not particularly limited, and examples thereof may include corn starch, waxy corn starch, potato starch, tapioca starch, wheat starch, rice starch, and the like. The oxidized starch can be manufactured by treating the raw material starch with an oxidizing agent such as sodium hypochlorite, acetic anhydride, hydrogen peroxide or nitric acid according to an ordinary method. The processed starch may be one manufactured by performing two or more of the same or different types of treatments, in combination. The processed starch may also be one manufactured by physical treatments such as a moist heat treatment, a fine grinding treatment, a heat treatment, and a hot water treatment, in addition to chemical treatments.

When starch is used, any one type may be used alone, or multiple types may be used in combination.

The amount of the flour (which indicates the total amount, when multiple types are used) can be set, as appropriate, by those skilled in the art, and the amount of the flour is, for example, 19% to 35%, preferably 20% to 33%, more preferably 21% to 30%, and further preferably 22% to 27%, with respect to the total amount of the batter (the total amount of raw materials). When soy flour is used as a part of the flour, the amount of the soy flour can be appropriately determined by those skilled in the art, and the amount of the soy flour is, for example, 1% to 10%, preferably 2% to 8%, more preferably 2% to 7%, and further preferably 3% to 5%, with respect to the total amount of the batter (or the total amount of raw materials).

In one aspect, the flour is added during the step for obtaining batter by further mixing the air bubble-containing substance with other raw materials; that is to say, the flour is contained in the raw material B.

### (Emulsified oil and fat)

The raw materials may include emulsified oil and fat. The emulsified oil and fat refers to an oil and fat that contains an oil and fat and an emulsifier and has the property of helping foaming and foam retention in batter. It is also called foaming emulsified oil and fat, or foaming oil and fat. The emulsified oil and fat is usually in a liquid state at room temperature.

The oil and fat contained in the emulsified oil and fat is not particularly limited, and examples thereof may include: vegetable oils and fats, such as canola oil, soybean oil, safflower oil, corn oil, rapeseed oil, sesame oil, linseed oil, sunflower oil, peanut oil, cottonseed oil, olive oil, rice oil, palm oil, rice bran oil, perilla oil, and grapeseed oil; and animal oils and fats, such as milk fat, lard, beef tallow, chicken oil, mutton tallow, horse tallow, fish oil, and whale oil. In addition, the oil and fat may be a transesterified oil and fat obtained by transesterifying these oils and fats, or a hydrogenated oil and fat obtained by hydrogenating these oils. The emulsifier contained in the foaming oil and fat is not particularly limited, and examples thereof may include a glycerin fatty acid ester, a sorbitan fatty acid ester, a propylene glycol fatty acid ester, a sucrose fatty acid ester, polyglycerin fatty acid, lecithin, polysorbate, and the like.

The emulsified oil and fat can contain other ingredients, as long as the effect of interest, foamability, is exhibited. Examples of such other ingredients may include water, a thickening stabilizer, salt seasonings such as common salts and potassium chloride, acidulants such as acetic acid, lactic acid and gluconic acid, colorants such as β-carotene, caramel and a red *koji* pigment, antioxidants such as tocopherol and a tea extract, plant proteins, flavors, and the like.

Various emulsified oils and fats are commercially available for use in the manufacture of food products, and any of these can be used in the present invention and embodiments. Any one type of emulsified oil and fat may be used alone, or multiple types may be used in combination.

When the emulsified oil and fat is used, the amount thereof (which indicates the total amount, when multiple types are used) can be set, as appropriate, by those skilled in the art, and it is, for example, 4% to 12%, preferably 5% to 11%, more preferably 6% to 10%, and further preferably 7% to 9%, with respect to the total amount of the batter (or the total amount of raw materials).

In one aspect, the emulsified oil and fat is added during the step for obtaining an air bubble-containing substance by performing mixing so as to allow gas to be contained; that is to say, the emulsified oil and fat is contained in the raw material A.

### (Other raw materials)

In one aspect, as long as the effect of interest is exhibited, the batter may contain raw materials other than the raw materials mentioned above. In addition, in order to further improve the food texture and deliciousness of the resulting product, the batter may contain raw materials other than the raw materials mentioned above.

An example of other raw materials may be a leavening agent. Such a leavening agent is effective for adjusting the specific gravity of the batter. Examples of the leavening agent that is used herein may include sodium hydrogen carbonate (sodium bicarbonate), ammonium hydrogen carbonate (ammonium bicarbonate), baking powder, dry yeast, fresh yeast, and the like. The leavening agent may be used alone or in combination with multiple types.

When the leavening agent is used, the amount thereof (which indicates the total amount, when multiple types are used) can be set, as appropriate, by those skilled in the art, and it is, for example, 1% to 10%, preferably 2% to 8%, more preferably% 2 to 7%, and further preferably 3% to 5%, with respect to the total amount of the batter (the total amount of raw materials).

The leavening agent is added during an appropriate step, depending on the type used. For example, when baking powder is used, it is mixed with other raw materials, after being mixed with the flour or at the same time as the flour, in accordance with the usual usage. That is, when the baking powder is used, it is preferably contained in the raw material B.

The raw materials can be set not to include eggs. According to the studies of the present inventors, the foamability and air bubble-stabilizing function of eggs can be sufficiently replaced by using milk or a processed product thereof and cell structure material. Therefore, even though eggs are not used, a delicious food product with good food texture, in which the air bubble structure can be sufficiently maintained, can be produced.

By using milk or a processed product thereof that is plant-based, the raw materials can be set not to include milk derived from animals, such as cow's milk. Furthermore, by using flour other than wheat flour, the raw materials can be set not to include wheat.

In one aspect, the raw materials do not include hydroxypropylmethyl cellulose. There is a technique of manufacturing sponge batter, a baked sponge base and roll cake using hydroxypropylmethyl cellulose (Patent Document 5 above). However, when the batter is foamed using hydroxypropylmethyl cellulose, in order to control the physical properties, it is necessary to foam it separately from sugars, which requires complicated steps. According to the studies of the present inventors, by using milk or a processed product thereof and cell structure material, the effect of interest can be obtained without performing the complicated steps when using hydroxypropylmethyl cellulose.

### [Manufacturing method]

### (Step for obtaining an air bubble-containing substance)

In this step, an air bubble-containing substance is obtained by performing mixing predetermined raw materials so to cause them to contain gas. Performing mixing the raw materials so to cause them to contain gas includes whipping, and foaming by blowing gas. The air bubble-containing substance is also referred to as a "meringue-like preparation" or a "meringue-like air bubble-containing substance."

This step can be preferably carried out using a mixer that is used in ordinary cake manufacture. In addition, this step can also be carried out by filling high-pressure gas into a special container with the predetermined raw materials, mixing the raw materials with the gas in the container, and discharging the mixture.

The former operation using a mixer can be specifically carried out by stirring the mixture of the predetermined raw materials with the mixer so to cause the mixture to hold gas (usually, the air in the environment). This operation can also be carried out by allowing the mixture to hold air during the mixing operation, and this operation can be preferably carried out industrially using a special equipment.

As an equipment for carrying out the latter operation, it can be used that a foaming food product manufacturing equipment also known as "espuma" (which is also referred to as a foamy food product manufacturing equipment) (for example, Japanese Patent Publication No. 2006-345776, Japanese Patent Publication No. 2007-028939 International Publication WO2008/149848, and https://www.espuma-advance.jp/advance_n/). In this equipment, gas is filled into a liquid mixture of raw materials contained in a container, and they are mixed. Then, the pressurized mixture of the raw materials is discharged from the outlet of a dispenser. At that time, the gas dissolved in the mixture of the raw materials is depressurized to swell and foam, so that an air bubble-containing substance with many air bubbles is prepared. The gas used is preferably a gas that is acceptable as a food additive and has a relatively high solubility in the mixture of the raw material. Examples of such a gas may include nitrous oxide (N₂O) and carbon dioxide.

According to the studies of the present inventors, even when the air bubble-containing substance is prepared using the foaming food product manufacturing equipment (espuma), the cell structure material can also exhibit an effect of stabilizing air bubbles.

This step can be carried out until the specific gravity of the resulting air bubble-containing substance becomes 0.6 or less, preferably 0.5 or less, more preferably 0.4 or less, and further preferably 0.3 or less. The lower limit value of the specific gravity is not particularly limited, and it may be, for example, 0.1 or more, or may also be 0.2 or more.

### (Mixing step)

The resulting air bubble-containing substance is mixed with other raw materials to prepare batter. This mixing step can be carried out manually, but it can be preferably carried out industrially using an automatic mixer or the like.

This step can be carried out until the specific gravity of the resulting air bubble-containing substance becomes 0.8 or less, preferably 0.76 or less, more preferably 0.7 or less, and further preferably 0.6 or less. The lower limit value of the specific gravity is not particularly limited, and it may be, for example, 0.2 or more, or may also be 0.3 or more.

### (Other steps)

In one aspect, the manufacturing method is a method for manufacturing batter, and in another aspect, the manufacturing method is a method for manufacturing a food product obtained by baking the batter. In the latter aspect, the manufacturing method comprises a baking step.

When the batter is subjected to the baking step, it may be poured into a predetermined mold.

The baking step can be carried out using a conventional baking equipment. An example of the baking equipment may be a deck oven. Baking conditions can be set by those skilled in the art, depending on the size and type of a food product to be obtained. For example, the temperature can be set to be 160°C to 250°C, and the time can be set to be 10 to 60 minutes.

### [Food product]

The aforementioned manufacturing method can be applied to various food products, in which eggs, sugars, and flour are usually used as raw materials, obtained by baking air bubble-containing batter. Examples of such food products may include a sponge cake and cakes made using the sponge cake (a shortcake, etc.), a roll cake, castella, a pancake (hotcake), souffle, macaroon, dacquoise and the like. Particularly preferred examples may include a sponge cake and a roll cake.

The present invention also relates to the following food products.

In one aspect, the present invention relates to batter or a food product obtained by baking the batter, containing an effective amount of cell structure material for maintaining air bubbles,
obtained by a manufacturing method comprising:
a step for obtaining an air bubble-containing substance by performing mixing a raw material A containing plant-based or animal-based milk or a processed product thereof so to cause the raw material A to contain gas; and
a step for obtaining batter by mixing a raw material B to the resulting air bubble-containing substance.

Moreover, in one aspect, the present invention relates to batter, or a baked food product having uniform air bubbles obtained by baking the batter, which contains:
plant-based or animal-based milk or a processed product thereof,
cell structure material,
sugars,
flour, and
emulsified oil and fat.

"Having uniform air bubbles" means that the air bubbles are uniformly dispersed in the food product. As one means for verifying the uniformly dispersed state of the air bubbles, it can be confirmed by whether air bubbles can be observed both in the upper part (the upper half part of the cross section) and the lower part (the lower half part of the cross section) when the cross section of the center of the food product is observed.

In one aspect, there are provided various food products, such as a sponge cake, in which eggs, sugars, and flour are usually used as raw materials, obtained by baking air bubble-containing batter, wherein the food products do not contain eggs but have uniform air bubbles and therefore good food texture. Good food texture can be generally evaluated by food texture. Specifically, depending on food products, they can be evaluated by their falling apart and softness. In addition, food products can also be comprehensively evaluated as a whole, including food texture and taste. Falling apart can also be referred to as melting in the mouth, and can also referred to as less stickiness (a condition in which starch adheres in the mouth, becomes clumpy, and difficult to swallow).

### Examples

### (1) Test Example 1: Verification test for air bubble-maintaining effect of soy pulp (okara)

In the process of manufacturing an egg-free sponge cake, soy pulp *(okara)* was added to a meringue-like preparation, and the food texture (falling apart and softness) of the sponge cake was verified.

### (Method for manufacturing sponge cake)

According to Table 1, unadjusted soy milk (manufactured by FUJI OIL CO., LTD.), emulsified oil and fat 1 (manufactured by FUJI OIL CO., LTD.; PALMING SELECT), and emulsified oil and fat 2 (manufactured by FUJI OIL CO., LTD.; PALMING L) were added into soy pulp *(okara)* powder (manufactured by KIKKOMAN SOYFOODS CO., LTD.; Okara Powder), soy milk powder (manufactured by FUJI OIL CO., LTD.; Soyafit 2000), and beet sugar (manufactured by YAMAGUCHI SEITO; beet non-centrifugal sugar (powder type)), which had previously been mixed with one another, and thereafter, the obtained mixture was fully mixed to prepare a meringue-like preparation (A).

Next, soy flour (manufactured by Mitake Food Manufacturing Co., Ltd.; deactivated soy flour), starch, and baking powder, which had previously been mixed with one another, were added to the prepared meringue-like preparation (A), and the resulting mixture was further mixed (B). Thereafter, 170 g of the obtained batter was filled into a No. 4 stainless steel circle ring (cake mold) with papers placed on the bottom and lateral surface thereof, and was then baked in an oven at 170°C for about 45 minutes to obtain a sponge cake.

The differences in the formulations of individual examples are described below. Details were summarized in the table below.

Examples 1 to 5: The amounts of soy flour and processed starch added in B were changed, and the influence thereof on the physical properties of each base was then verified.

Reference Example 1: A baked base was prepared by the same method as that of Example 1, with the exception that soy pulp *(okara)* powder was not added.

Reference Example 2: A baked base was prepared under the same conditions as those of Example 1, with the exceptions that soy pulp *(okara)* powder was not added, and further that soy milk was replaced with water.

The formulations, baking conditions, and evaluations for Examples 1 to 5 and Reference Examples 1 and 2 were summarized in the table below.

The "specific gravity" in the table refers to % by weight per 100 ml. In other words, when the weight of 100 ml is 50 g, the specific gravity is 0.5 (the same applies to other test examples and tables).

Sensory evaluation was carried out using three indicators: "falling apart," "softness," and "comprehensive evaluation." Five panelists trained in the dessert field evaluated using a four-level scale of ⊚, ○, △, and ×. For all items, △ or higher was considered to be passed. Besides, as for softness, since some examples were too soft to eat, ● was used for evaluation.

### (Falling apart; melting in the mouth)

⊚: Very good
○: Good
△: A little difficult to fall apart, but acceptable
×: Difficult to fall apart. Sticky.

### (Softness)

●: Too soft, not suitable for eating.
⊚: Very soft. Fluffy.
○: Soft, moderately fluffy.
△: Acceptable softness retained.
×: Solid.

### (Comprehensive evaluation; flavor as a sponge cake)

⊚: Very tasty as a sponge cake.
○: Tasty as a sponge cake.
△: Acceptable level of tasty.
×: Unacceptable. Not suitable for eating.

The results are shown in the table below.

**[Table 1]**

| Formulation (Unit: weight %) | | Example 1 | Example 2 | Example 3 | Example 4 | Example 5 | Ref. Example 1 | Ref. Example 2 |
|---|---|---|---|---|---|---|---|---|
| Unadjusted soy milk | A | 43.70 | 43.70 | 43.70 | 43.70 | 43.70 | 46.80 | - |
| Water | A | - | - | - | - | - | - | 43.10 |
| Soy pulp (*okara*) powder | A | 2.60 | 2.60 | 2.60 | 2.60 | 2.60 | - | - |
| Soy milk powder | A | 3.40 | 3.40 | 3.40 | 3.40 | 3.40 | 3.40 | 7.00 |
| Beet sugar | A | 16.50 | 16.50 | 16.50 | 16.50 | 16.50 | 16.50 | 16.60 |
| Emulsified oil and fat 1 | A | 5.30 | 5.30 | 5.30 | 5.30 | 5.30 | 5.30 | 5.30 |
| Emulsified oil and fat 2 | A | 3.50 | 3.50 | 3.50 | 3.50 | 3.50 | 3.50 | 3.50 |
| Soy flour | B | 9.00 | 7.00 | 5.00 | 3.00 | 1.00 | 11.75 | 11.75 |
| Starch | B | 15.00 | 17.00 | 19.00 | 21.00 | 23.00 | 11.75 | 11.75 |
| Baking powder | B | 1.00 | 1.00 | 1.00 | 1.00 | 1.00 | 1.00 | 1.00 |
| Total | | 100.00 | 100.00 | 100.00 | 100.00 | 100.00 | 100 | 100 |
| | | | | | | | | |
| Specific gravity after mixing of A | | 0.33 | 0.33 | 0.33 | 0.33 | 0.3 | 0.27 | 0.28 |
| Specific gravity after mixing of B | | 0.6 | 0.6 | 0.58 | 0.55 | 0.53 | 0.49 | 0.54 |
| Falling apart | | ○ | ○ | ○ | ○ | ○ | × | × |
| Softness | | △ | △ | ○ | ○ | ⊚ | ● | ● |
| Comprehensive evaluation | | △ | ○ | ⊚ | ○ | △ | × | × |
| Comments | | It melts well in mouth. It's fluffy, but the fluffiness is week. It has a strong soy flour flavor. | It melts well in mouth. It's fluffy, but the fluffiness is week. | It's fluffy and melts well in mouth. | It melts well in mouth. Slightly soft. | It melts well in mouth. Soft. | It's soft and sticky. Sponge-like tissue structure has not been formed. | It's soft and strongly sticky. Sponge-like tissue structure has not been formed. |

In Reference Example 1 or Reference Example 2, which did not contain soy pulp *(okara)* powder, the falling apart was poor and the stickiness was strong. In contrast, in Examples 1 to 5, which contained soy pulp *(okara)* powder, all bases were fluffy, had little stickiness, and were melted in the mouth well. It was demonstrated that a food texture similar to that obtained when eggs are used was achieved, even though eggs were not used in this formulation.

In addition, when soy pulp *(okara)* powder was not added, even if the batter was foamy immediately after mixing, the air bubbles were then lost during the subsequent preparation and baking, and as a result, the batter did not swell. This suggested that soy pulp *(okara)* powder contributed to the maintaining of the air bubbles caused by soy milk, sugar, and emulsified oil and fat.

From the above-described results, it is presumed that, by adding soy pulp *(okara)* powder to a meringue-like preparation, which was prepared first by adding and mixing soy milk, sugar, and emulsified oil and fat, the formed air bubbles were stabilized and also the air bubble were maintained during baking, so that good melt-in-the-mouth texture could be achieved.

Next, the amount of soy flour and starch was changed when the powder raw material shown as B was added to the meringue-like preparation first shown as A, and the influence thereof on the physical properties of the base was then verified. It was clarified that making the percentage of soy flour increased and the percentage of starch decreased resulted in a firm, hard food texture, while that making the percentage of starch increased and the percentage of soy flour increased resulted in good swelling and a fluffy, soft food texture. From the above, it was suggested that various physical properties could be achieved by changing the amounts of soy flour and starch. For example, it has been suggested that softness can be brought to the base by adjusting the type and amount of grain flour such as soy flour and starch, so that desired physical properties can be obtained, when a roll cake is manufactured by rolling a sponge cake.

### (2) Test Example 2: Verification test for appropriate amount of soy pulp (okara) powder mixed

In Test Example 1, as a result that soy pulp *(okara)* powder, which is cell structure material, was added to the meringue-like air bubble-containing substance, the formed air bubbles were stabilized, and thus the food texture of the sponge cake was favorable. Therefore, the amount of the soy pulp (*okara*) powder mixed was verified.

Furthermore, the height and food texture of the baked sponge cake were also verified, when the timing of adding soy pulp (*okara*) powder was that of the meringue-like preparation (A) or the same as that of adding the powder raw materials (B).

Hereafter, the differences in the formulations of individual examples are described. Details were summarized in the table below. The same raw materials as those in Test Example 1 were used.

Examples 6 to 10 and Reference Example 4: Batter was baked by the same method as that of Test Example 1, with the exception that the amount of soy milk in B was adjusted depending on the amount of soy pulp (*okara*) powder added in A and the changed amount.

Examples 11 to 13 and Reference Examples 5 to 7: The soy pulp (*okara*) powder, which had been added in A, was mixed with the powder raw materials in B, and a meringue-like air bubble-containing substance was added. Batter was baked by the same method as that of Test Example 1, with the exception that the amount of soy milk in A was adjusted depending on the amount of soy pulp (*okara*) powder and the changed amount.

Reference Example 3: A baked base was prepared by the same method as that of Test Example 1, with the exception that soy pulp (*okara*) powder was not mixed.

The sensory evaluation was performed by the same method as that of Test Example 1. The height of the sponge cake was obtained by leaving the prepared batter at room temperature for 1 hour, then baking the resulting batter, then cutting the baked base in half in the center thereof, and then measuring the height of the center.

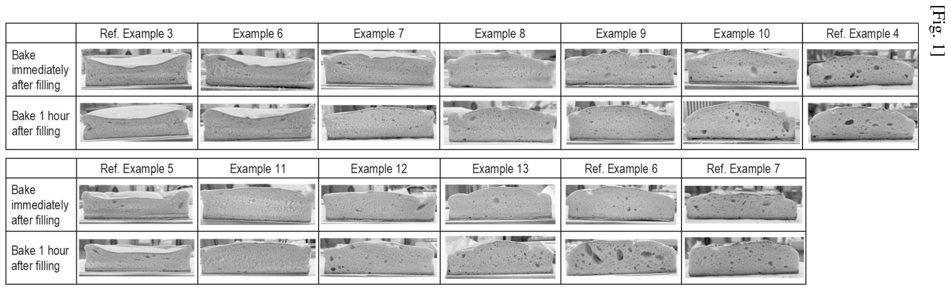

The results are shown in the table below and Fig. 1.

**[Table 2]**

| Formulation (Unit: weight %) | | Ref. Example 3 | Example 6 | Example 7 | Example 8 | Example 9 | Example 10 | Ref. Example 4 |
|---|---|---|---|---|---|---|---|---|
| Unadjusted soy milk | A | 46.30 | 45.00 | 43.70 | 42.40 | 41.1 | 39.8 | 38.5 |
| Soy pulp (*okara*) powder | A | - | 1.30 | 2.60 | 3.90 | 5.20 | 6.50 | 7.80 |
| Soy milk powder | A | 3.40 | 3.40 | 3.40 | 3.40 | 3.40 | 3.40 | 3.40 |
| Beet sugar | A | 16.50 | 16.50 | 16.50 | 16.50 | 16.50 | 16.50 | 16.50 |
| Emulsified oil and fat 1 | A | 5.30 | 5.30 | 5.30 | 5.30 | 5.30 | 5.30 | 5.30 |
| Emulsified oil and fat 2 | A | 3.50 | 3.50 | 3.50 | 3.50 | 3.50 | 3.50 | 3.50 |
| Soy flour | B | 5.00 | 5.00 | 5.00 | 5.00 | 5.00 | 5.00 | 5.00 |
| Starch | B | 19.00 | 19.00 | 19.00 | 19.00 | 19.00 | 19.00 | 19.00 |
| Baking powder | B | 1.00 | 1.00 | 1.00 | 1.00 | 1.00 | 1.00 | 1.00 |
| Total | | 100 | 100.00 | 100.00 | 100.00 | 100.00 | 100.00 | 100.00 |
| | | | | | | | | |
| Specific gravity after mixing of A | | 0.313 | 0.32 | 0.32 | 0.33 | 0.35 | 0.41 | 0.54 |
| Specific gravity after mixing of B | | 0.48 | 0.51 | 0.6 | 0.61 | 0.69 | 0.76 | 0.86 |
| Height | | 2 | 2.5 | 2.9 | 3.8 | 3.6 | 3.7 | 3.5 |
| Falling apart | | × | × | ○ | ○ | ○ | ○ | △ |
| Softness | | ● | ● | ⊚ | ⊚ | ○ | ○ | × |
| Comprehensive evaluation | | × | △ | ⊚ | ⊚ | ○ | ○ | × |
| Comments | | Sticky, slimy, and sinks in the middle. | Slightly sticky. A little clogging at the bottom and it doesn't swell well. | Less sticky. Less clogging, and a sponge-like structure has been formed. | Less sticky. Less clogging, and a sponge-like structure has been formed. | Slightly solid. A sponge-like structure has been formed without sinking of the middle. | Somewhat solid. A little clogging at the bottom. | Solid. A little clogging at the bottom. The batter is solid before baking, having no fluidity. |

| Formulation (Unit: weight %) | | Ref. Example 5 | Example 11 | Example 12 | Example 13 | Ref. Example 6 | Ref. Example 7 | |
|---|---|---|---|---|---|---|---|---|
| Unadjusted soy milk | A | 45.00 | 43.70 | 42.40 | 41.10 | 39.80 | 38.50 | |
| Soy milk powder | A | 3.40 | 3.40 | 3.40 | 3.40 | 3.40 | 3.40 | |
| Beet sugar | A | 16.50 | 16.50 | 16.50 | 16.50 | 16.50 | 16.50 | |
| Emulsified oil and fat 1 | A | 5.30 | 5.30 | 5.30 | 5.30 | 5.30 | 5.30 | |
| Emulsified oil and fat 2 | A | 3.50 | 3.50 | 3.50 | 3.50 | 3.50 | 3.50 | |
| Soy pulp (*okara*) powder | B | 1.30 | 2.60 | 3.90 | 5.20 | 6.50 | 7.80 | |
| Soy flour | B | 5.00 | 5.00 | 5.00 | 5.00 | 5.00 | 5.00 | |
| Starch | B | 19.00 | 19.00 | 19.00 | 19.00 | 19.00 | 19.00 | |
| Baking powder | B | 1.00 | 1.00 | 1.00 | 1.00 | 1.00 | 1.00 | |
| Total | | 100.00 | 100.00 | 100.00 | 100.00 | 100.00 | 100.00 | |
| | | | | | | | | |
| Specific gravity after mixing of A | | 0.42 | 0.33 | 0.37 | 0.37 | 0.38 | 0.32 | |
| Specific gravity after mixing of B | | 0.6 | 0.61 | 0.69 | 0.76 | 0.78 | 0.82 | |
| Height | | 2.3 | 3.7 | 3.4 | 3.5 | 3.3 | 3.5 | |
| Falling apart (melting in the mouth) | | × | △ | × | × | × | × | |
| Softness | | × | △ | △ | △ | × | × | |
| Evaluation | | × | △ | △ | △ | × | × | |
| Comments | | Sticky like rice cake. Clogging at the bottom. | Clogging at the bottom, but a sponge-like structure has been maintained without sinking of the middle of the base. | Sticky. It is shorter in height compared to when the soy pulp (okara) powder was added to a meringue side. | Some clogging at the lower part. Coarse. | Some clogging at the lower part. Very coarse. | Some clogging at the bottom. Solid and sticky. The batter before baking is solid, having no fluidity. | |

It became clear that, by adding soy pulp (*okara*) powder to a meringue-like preparation prepared from soy milk, sugar, and emulsified oil and fat, air bubbles were maintained, and as a result, a soft base with good swelling and a fluffy texture can be manufactured.

Thus, it was verified what an influence the additive amount of this soy pulp (*okara*) powder brought about on the physical properties of a base after baking. When no soy pulp (*okara*) powder was added, the base did not fall apart well in the mouth, and had stickiness and a slimy food texture. Moreover, since the air bubbles were not stable, the sponge cake after baking sunk in the middle, and the height of the base was not very high and was 2 cm.

When soy pulp (*okara*) powder was added to A, when the additive amount of soy pulp (*okara*) powder was 1.3%, air bubbles were not generated sufficiently, and the batter had a high density at the bottom, i.e., Clogging occurred and the batter did not swell well. As a result, the baked base did not swell well too, and it was viscous and sticky. It did not fall apart well in the mouth and the height of the baked base was only 2.5cm, which was not very high.

When the additive amount of soy pulp (*okara*) powder was 2.6%, the base fell apart well in the mouth, melted well in the mouth, and became less sticky, and clogging at the bottom of the batter was reduced. Furthermore, even though the batter did not contain eggs or milk, which have foamability, a sponge-like structure was observed even after baking, and thus, it was verified that the soy pulp (*okara*) powder had the effect of maintaining air bubble in the batter. The height was 2.9 cm, which was high. This sponge-like structure was also observed when the soy pulp (okara) powder was added within the range from 2.6% to 5.2%, and the batter also had a sufficient height. Thus, it was suggested that addition of the soy pulp (okara) powder in this range is appropriate. Within this range, by increasing the amount of soy pulp (okara) powder used, the clogging of the batter in the cake mold was reduced, the falling apart and melting in the mouth of the base after baking became good, and stickiness was eliminated. The sponge structure characteristic for sponge cake was created, and the height of the sponge cake after baking was also increased. It is considered that air bubble stability was obtained by adding the soy pulp (okara) powder, and that a good food texture was obtained. Regarding softness, the batter had softness up to the additive amount of soy pulp (okara) powder of 3.9%, but by addition of 5.2% soy pulp (okara) powder, the base became a little solid and lost its softness.

When the soy pulp (okara) powder was added at 6.5%, the fluidity of the batter was deteriorated, clogging was generated there, and relatively large air bubbles were generated in the batter. As a result, the batter lost its softness, but the height of the base was 3.8 cm, which maintained the height. The baked base had a slightly solid food texture, but was at a solid level to be eaten properly.

When the additive amount of the soy pulp (okara) powder was increased to 7.8%, the batter before baking was solid and had no fluidity, and some clogging was observed at the bottom. After baking, the base became even solider, and several large air bubbles were observed, which were probably caused by the batter being dense. Regarding food texture, the base did not fall apart well, and was solid, and the food texture was unfavorable.

From the above, it was demonstrated that the air bubble-maintaining effect of soy pulp (okara) powder depends on the amount of the soy pulp (okara) powder. It was demonstrated that the soy pulp (okara) powder exhibits its effects at an additive amount of 1.6% or more and that the effect is particularly good at the additive amount of 2.6% or more.

In addition, when the specific gravity of batter after mixing was examined, it was found that the specific gravity upon the mixing the raw material A was increased by addition of the soy pulp (okara) powder, and that the specific gravity after addition and mixing of the powder raw material B was also increased accordingly. From the above, it was suggested that the air bubble-maintaining effect can be adjusted by changing the amount of the soy pulp (okara) powder, and that the appropriate additive amount of the soy pulp (okara) powder can be adjusted by checking the specific gravity at that time. In other words, it was suggested that a baked base containing an appropriate air bubbles can be obtained by setting the specific gravity after addition and mixing of A and to be within the range of 0.32 to 0.41, and also, by setting the specific gravity after addition and mixing of B to be within the range of 0.51 to 0.76.

Moreover, when the soy pulp (okara) powder was added to the powder raw material B, and when it was added at 1.3%, clogging occurred inside the cake mold, especially on the bottom surface portion, and the base had a sticky food texture at a level that was not suitable for eating. Thus, when the soy pulp (okara) powder was added at 2.6%, the melting texture in the mouth was improved and the air bubble-stabilizing effect was confirmed. However, the effect was small, and the effect could also be verified at 5.2%. Furthermore, it was demonstrated that the height of the base after baking was lower than the case where the soy pulp (okara) powder was added to a meringue-like preparation, since the sponge structure characteristic for sponge cake was not created. When the cross section of the base was checked, since the air bubbles were not maintained, the base had large voids in some places, instead of uniform voids. From the above, it was verified that, by adding the soy pulp (okara) powder to a meringue-like preparation, the air bubbles became stabile. However, it became clear that addition and mixing of the soy pulp (okara) power to the liquid raw material that is first mixed provide foam stability, while addition of the soy pulp (okara) powder to the powder raw material that is added later provides the effect, but it is small.

### (3) Test Example 3: Observation of structure of samples in verification test for appropriate amount of soy pulp (okara) powder mixed

Next, the structure of the cross section of the sponge cake created in Test Example 2 was observed. Specifically, using a digital microscope, a slice section of sponge cake prepared with a thickness of about 3 mm was placed on a stage (sample stage), and a surface image was taken from above the stage in the vertical direction by the following method.

### (Equipment used)

Digital microscope: KEYENCE VHX-900F
Magnification: ×100
Shutter speed: Auto (70 ms)
Gain: Preset (0 dB)
Control: A baked base was prepared by the same method as that of Reference Example 3, and was subjected to the test.
Samples: By the same method as those in Examples 6 to 13 and Reference Examples 4 to 7, the soy pulp (okara) powder was added at 1.3% to 7.8%, when the meringue-like preparation (A) or the powder raw material (B) was added, so as to prepare each sponge cake. Each sponge cake was prepared by baking either immediately after filling the batter or after leaving it for 1 hour.

### (Sample-treating method)

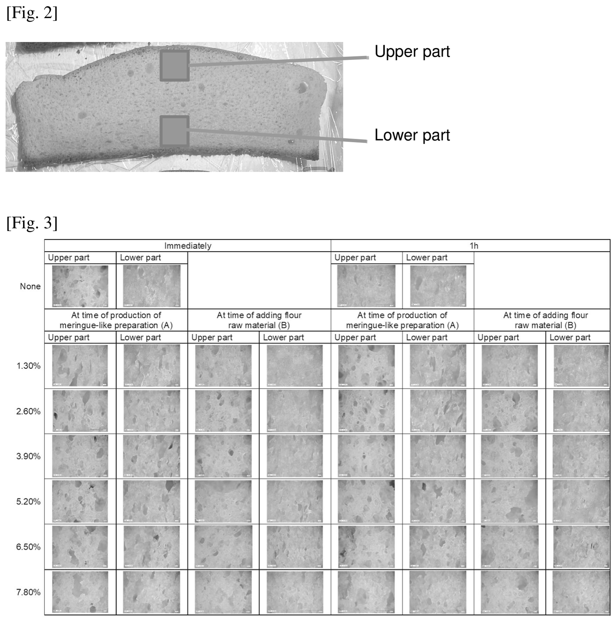

1. The sponge cake was divided in half lengthwise.
2. The cross section was cut into approximately 3 mm thick with a knife, in a still half-frozen state.
3. The upper part and the lower part were observed at the center of the cross section (see Fig. 2).

At that time, while the baked parts (brown colored parts) at the top and bottom were avoided, the structure of the air bubbles in the sponge cake was observed.

The results are shown in Fig. 3. In the sample of Reference Example 3, to which no soy pulp (okara) powder had been added, an air bubble structure was observed in the upper part, but the air bubble structure could not be observed in the lower part. In contrast, in the samples, in which the soy pulp (okara) powder had been added to the liquid raw material (A) (Examples 6 to 10 and Reference Example 4), air bubbles were maintained not only in the upper part but also in the lower part. It was suggested that a fluffy base is correlated with the state of air bubbles in the present test example. On the other hand, the groups in which the soy pulp (okara) powder had been added to the powder raw material (B) (Examples 11 to 13 and Reference Examples 5 to 7) had a few air bubbles overall, and particularly the air bubbles were small in the lower part. The groups have a so-called clogging structure.

From the above, it was clarified that air bubbles can be generated in batter by adding the soy pulp (okara) powder, even without using eggs or milk, and that a structure having many air bubbles can be obtained, especially when the soy pulp (okara) powder is added and mixed in the liquid raw material (A).

### (4) Test Example 4: Verification test for cell structure material other than soy pulp (okara) powder

Next, materials containing cell tissues other than soy pulp (okara) were added, and their effects were then verified.

### (Method for manufacturing sponge cake)

Unadjusted soy milk (manufactured by FUJI OIL CO., LTD.) and emulsified oil and fat (manufactured by RIKEN VITAMIN CO., LTD.; Patigrace 500) were added into soy milk powder (manufactured by FUJI OIL CO., LTD.; Soyafit 2000), beet sugar (manufactured by YAMAGUCHI SEITO; beet non-centrifugal sugar (powder type)), and cell structure material, which had previously been mixed with one another, and thereafter, the obtained mixture was fully mixed to prepare a meringue-like preparation (A). Subsequently, soy flour (manufactured by Mitake Food Manufacturing Co., Ltd.; deactivated soy flour), processed starch (phosphate-crosslinked starch), and baking powder, which had previously been mixed with one another, were added, followed by performing a further mixing to prepare batter (B).

The obtained batter (450 g) was filled into a half of a half sheet pan *(rokudori-tenban)* with a paper placed thereon, and was then baked in an oven at 200°C for about 15 minutes a to obtain a baked base. The sensory evaluation was performed by the same method as that of Test Example 1. The manufacturing conditions and evaluation results of Examples 14 to 20 and Reference Example 8 were summarized in Table 3.

As cell structure material, the following were used.
Soy pulp (okara) powder (manufactured by KIKKOMAN SOYFOODS CO., LTD.; Okara Powder)
Peas pulp: Peas pulp was prepared by the method described below and was used.
Oat fiber S (manufactured by RETTENMAIER; VITACEL(registered trademark) HF600/30) average fiber length: 30 µm
Oat fiber L (manufactured by RETTENMAIER; VITACE(registered trademark) HF200) average fiber length: 250 µm
Rice bran: Rice bran was prepared by the method described below and was used.
Wheat bran (manufactured by Fresh Food Service; Wheat Bran MP)
Apple fiber (manufactured by RETTENMAIER; VITACEL(registered trademark) AF401-30), which is derived from apples and contains 45% of insoluble dietary fiber and 10% of water-soluble dietary fiber

Furthermore, xanthan gum (manufactured by San-Ei Gen F.F.I., Inc.; VIS TOP D-3800) was used for comparison.

Peas pulp was manufactured by the following method.
(1) Dried yellow peas were washed, were then soaked in water, and were allowed to sufficiently absorb water for about 16 hours.
(2) Twice the amount of water for the absorbed peas was added, and the peas were then stirred using a food processor until the resultant reached a certain size.
(3) The resultant obtained in (2) was heated with high to medium heat, while stirring carefully to prevent the pot from burning. Once boiling, the heat was reduced to low to prevent overflow, and the resultant was heated for about 10 minutes.
(4) Bean milk (soluble part) and bean pulp (insoluble part) were separated from each other, using a filter cloth.

Rice bran was manufactured by the following method and was used.

Using a Toyo Tester rice polishing machine (MC-90A), brown rice was placed in the machine and was then polished at a yield percentage of 10% of the outer surface. The rice bran obtained at that time was used in the present test.

The results are shown in the table below.

**[Table 3]**

| Formulation (Unit: weight %) | | Example 14 | Example 15 | Example 16 | Example 17 | Example 18 | Example 19 | Example 20 | Ref. Example 8 |
|---|---|---|---|---|---|---|---|---|---|
| Unadjusted soy milk | A | 48.80 | 48.80 | 49.80 | 49.80 | 48.80 | 48.80 | 48.80 | 50.20 |
| Soy pulp (*okara*) powder | A | 1.60 | - | - | - | - | - | - | - |
| Peas pulp | A | - | 1.60 | - | - | - | - | - | - |
| Oat fiber S | A | - | - | 0.60 | - | - | - | - | - |
| Oat fiber L | A | - | - | - | 0.60 | - | - | - | - |
| Rice bran | A | - | - | - | - | 1.60 | - | - | - |
| Wheat bran | A | - | - | - | - | - | 1.60 | - | - |
| Apple fiber | A | - | - | - | - | - | - | 1.60 | - |
| Xanthan gum | A | - | - | - | - | - | - | - | 0.20 |
| Soy milk powder | A | 5.00 | 5.00 | 5.00 | 5.00 | 5.00 | 5.00 | 5.00 | 5.00 |
| Beet sugar | A | 14.60 | 14.60 | 14.60 | 14.60 | 14.60 | 14.60 | 14.60 | 14.60 |
| Emulsified oil and fat | A | 5.00 | 5.00 | 5.00 | 5.00 | 5.00 | 5.00 | 5.00 | 5.00 |
| Soy flour | B | 4.00 | 4.00 | 4.00 | 4.00 | 4.00 | 4.00 | 4.00 | 4.00 |
| Processed starch | B | 20.00 | 20.00 | 20.00 | 20.00 | 20.00 | 20.00 | 20.00 | 20.00 |
| Baking powder | B | 1.00 | 1.00 | 1.00 | 1.00 | 1.00 | 1.00 | 1.00 | 1.00 |
| Total | | 100.00 | 100.00 | 100.00 | 100.00 | 100.00 | 100.00 | 100.00 | 100.00 |
| | | | | | | | | | |
| Specific gravity after mixing of A | | 0.286 | 0.21 | 0.24 | 0.259 | 0.267 | 0.238 | 0.28 | 0.56 |
| Specific gravity after mixing of B | | 0.49 | 0.36 | 0.43 | 0.45 | 0.44 | 0.44 | 0.47 | 0.67 |
| Height | | 1.7 | 1.8 | 1.7 | 1.6 | 1.4 | 1.8 | 1.5 | 1.4 |
| Falling apart | | ○ | ○ | ○ | ○ | ⊚ | ⊚ | △ | × |
| Softness | | ⊚ | ⊚ | ⊚ | ○ | ○ | ⊚ | △ | ● |
| Comprehensive evaluation | | ⊚ | ⊚ | ⊚ | ○ | ○ | ⊚ | △ | × |
| Comments | | It's a little sticky, but melts well in mouth. | The base was elastic and finely textured. | It's a little sticky, but melts well in mouth. | It's a little sticky. The base is durable. | It's less sticky. It's a little crumbly. | Not sticky. Salty. | It's a little sticky. | It does not fall apart well, and it is so sticky and unsuitable. |

As described above, it has been clarified that, by adding soy pulp *(okara)* powder that is cell structure material to a meringue-like preparation, the air bubbles in batter are maintained and as a result, a fluffy sponge base can be done baking.

Thus, cell structure material other than the soy pulp *(okara),* such as bean pulp derived from peas, or oat fiber, was added, and the effects thereof were then verified. First, because soy pulp (okara) is usually prepared from soybeans, bean pulp was likewise prepared also from peas, and a test of adding the pea pulp was carried out. As a result, an elastic and finely-textured base could be prepared, and thereby, it became clear that the raw material for bean pulp is not limited to soybeans, and that the cell structure material of other legumes could also be used in the same way.

Next, a similar verification was carried out on oat fiber. Since oat fibers with a variety of fiber lengths are available, oat fiber S with a short fiber length (average fiber length: 30 µm) and oat fiber L (average fiber length: 250 µm) were used, and it was verified whether the structures of those fibers influence the present effects.

As a result, it became clear that good batter, in which air bubbles were maintained, were obtained in both cases regardless of either of the oat fibers. However, it became clear too that a base, which melted well in the mouth, is obtained using oat fiber S with a short fiber length, whereas a firm base is obtained using oat fiber L with a long fiber length. From these results, it was suggested that the structure of the cell structure material influences the physical properties of base.

Moreover, verifications were performed using rice bran and wheat bran. As a result, good batter, in which air bubbles were maintained, were obtained in both cases of using rice bran and wheat bran. In particular, in the case of using wheat bran, it was not sticky and was excellent in terms of a melting texture in the mouth and a food texture, which were very favorable results in terms of the physical properties of the sponge cake.

Furthermore, a verification was performed using apple fiber. Although the base had a little poor falling apart and sticky food texture, it had sufficient swelling as a cake, which was within the acceptable range in terms of the physical properties of the sponge cake.

Further, as a reference example, a verification was carried out using xanthan gum, a thickening polysaccharide that does not have a cellular structure. The obtained base was very sticky, had a poor melting texture in the mouth and a poor food texture, and was determined to be outside the acceptable range in terms of physical properties of sponge cake.

From the above results, it was demonstrated that when insoluble dietary fibers that retain a cellular structure, such as bean pulp, wheat bran or apple fiber, are used, air bubbles are maintained extremely well. On the other hand, it was suggested that when xanthan gum, a thickening polysaccharide, was contained, the xanthan gum retained moisture in the batter and is thereby gelatinized, which lead to a little unfavorable result in terms of physical properties of sponge cake.

### (5) Test Example 5: Verification using milk

In the experiments conducted so far, soy milk that is a plant milk has been used, but a verification was carried out using cow's milk.

A sponge cake was prepared by the same manufacturing method as that of Test Example 4, with the exception that soy milk was changed to cow's milk (MEGMILK SNOW BRAND Co., Ltd.). The sensory evaluation was performed by the same method as that of Test Example 1. The manufacturing conditions and evaluation results were summarized in the following table.

The results are shown in the table below.

**[Table 4]**

| Formulation (unit: weight %) | | Example 21 |
|---|---|---|
| Cow's milk | A | 48.2 |
| Soy pulp (*okara*) powder | A | 1.6 |
| Soy milk powder | A | 5.0 |
| Beet sugar | A | 14.6 |
| Emulsified oil and fat | A | 5.1 |
| Heated soy flour | B | 4.0 |
| Processed starch | B | 20.5 |
| Baking powder | B | 0.9 |
| Total | | 100.0 |
| | | |
| Specific gravity after mixing of A | | 0.26 |
| Specific gravity after mixing of B | | 0.52 |
| Height | | 1.4 |
| Falling apart | | ○ |
| Softness | | ○ |
| Comprehensive evaluation | | ○ |
| Comments | | Although the fluffiness was slightly reduced, the sponge structure was formed, and the food texture was good. |

A sponge cake, in which soy milk, a plant milk, was used and a cell structure was added, has been verified. However, it was shown that the sponge cake made with cow's milk also had sufficient swelling and a sponge height and was excellent in terms of both falling apart and food texture, while the fluffiness slightly reduced. It was shown that the sponge structure was constructed and that the stability of the air bubbles was also sufficient.

From these results, it was demonstrated that a sponge cake with a similarly fluffy food texture can be manufactured even when cow's milk, other than plant milk, is used.

### (6) Test Example 6: Verification using foaming food product manufacturing device

In the meringue-like preparation (A) so far, air bubbles were generated by adding an ingredient with foamability (emulsified oil and fat), but a verification was carried out using a foaming food product manufacturing equipment (espuma), where air bubbles were generated physically.

The foaming food product manufacturing equipment is referred to as "espuma", and is a food, a cooking method, or a cooking equipment, in which pressurized gas and food material are allowed to coexist in a pressure-resistant container, and the pressure is then released by operating a nozzle, so that the food material comes out in a foamy form.

Soy milk (manufactured by FUJI OIL CO., LTD.) was added into soy pulp (okara) powder (manufactured by KIKKOMAN SOYFOODS CO., LTD.; Okara Powder), soy milk powder (manufactured by FUJI OIL CO., LTD.; Soyafit 2000), and beet sugar (manufactured by YAMAGUCHI SEITO; beet non-centrifugal sugar (powder type)), which had previously been mixed with one another, and the obtained mixture was mixed using a whisk. Further, rice oil (manufactured by Oryza Oil & Fat Chemical Co., Ltd.; *Oryza no Kome Yu* (Oryza's rice oil) was added to the mixture, and the resulting mixture was fully mixed. The obtained mixture was filled into an espuma container (manufactured by NIPPON TANSAN GAS CO., LTD.; Advanced Dispenser M size). The mixture was shaken manually for about 2 minutes, and was then discharged from a nozzle together with carbon dioxide (CO₂) to create a meringue-like preparation (A).

Subsequently, soy flour (manufactured by Mitake Food Manufacturing Co., Ltd., deactivated soy flour) and processed starch (phosphate-crosslinked starch), which had previously mixed with each other and had been sifted, were added into the prepared meringue-like preparation (A), and the obtained mixture was then mixed to prepare batter (B).

The obtained batter (250 g) was filled into one fourth of a half sheet pan (*rokudori-tenban*) with a paper placed thereon, and was then baked in an oven at 200°C for about 15 minutes. The sensory evaluation was performed by the same method as that of Test Example 1. The manufacturing conditions and evaluation results of Example 25 and Reference Example 9 were summarized in a table.

The results are shown in the table below.

**[Table 5]**

| Formulation (unit: weight %) | | Ref. Example 9 | Example 22 |
|---|---|---|---|
| Soy pulp (*okara*) powder | A | - | 2.00 |
| Soy milk powder | A | 3 | 3 |
| Unadjusted soy milk | A | 48.00 | 46.00 |
| Beet sugar | A | 15.00 | 15.00 |
| Rice oil | A | 10.00 | 10.00 |
| Soy flour | B | 4.00 | 4.00 |
| Processed starch | B | 20.00 | 20.00 |
| Total | | 100.00 | 100.00 |
| | | | |
| Specific gravity after mixing of A | | 0.2 | 0.22 |
| Specific gravity after mixing of B | | 1.05 | 0.84 |
| Height | | 0.4 | 0.7 |
| Falling apart | | × | ○ |
| Softness | | × | ○ |
| Comprehensive evaluation | | × | ○ |
| Comments | | There are almost no air bubbles, and a sponge structure has not been formed. | The base has air bubbles, and a sponge structure has been formed. |

A verification was carried out regarding whether soy pulp (okara) has an air bubble-stabilizing effect when batter is physically foamed using espuma, without adding an ingredient with foamability. As a result, it was demonstrated that even when the batter is foamed using espuma, by using soy pulp (okara), the batter has sufficient swelling and a sponge height and was favorable in terms of both falling apart and food texture.

From these results, it was demonstrated that even when batter is foamed by a physical method, it is possible to manufacture sponge cakes with a fluffy food texture, just like when a foaming component is added.

## Claims

1. A method for manufacturing batter or a food product obtained by baking the batter, the method comprising:
a step for obtaining an air bubble-containing substance by performing mixing a raw material A containing plant-based or animal-based milk or a processed product thereof so to cause the raw material A to contain gas; and
a step for obtaining batter by mixing a raw material B to the resulting air bubble-containing substance,
wherein at least one among the raw material A and the raw material B contains an effective amount of cell structure material for maintaining air bubbles.

2. The manufacturing method according to claim 1, wherein the raw material A contains the effective amount of cell structure material for maintaining air bubbles.

3. The manufacturing method according to claim 1, wherein the milk or a processed product thereof is one or more selected from the group consisting of cow's milk, almond milk, rice milk, coconut milk, oat milk, and bean milk.

4. The manufacturing method according to claim 1, wherein the milk or a processed product thereof contains bean milk or cow's milk.

5. The manufacturing method according to claim 1, wherein the milk or a processed product thereof is bean milk produced from one or more selected from the group consisting of soybeans, peas, kidney beans, chickpeas, and adzuki beans.

6. The manufacturing method according to claim 1, wherein the milk or a processed product thereof contains a protein having air bubble stability.

7. The manufacturing method according to claim 1, wherein the cell structure material is one or more selected from the group consisting of bean pulp bran, rice bran, and fruit fiber.

8. The manufacturing method according to claim 1, wherein the cell structure material is bean pulp produced from one or more selected from the group consisting of soybeans, peas, kidney beans, chickpeas and adzuki beans.

9. The manufacturing method according to claim 1, wherein the cell structure material is bran produced from one or more selected from the group consisting of wheat, barley, and oats.

10. The manufacturing method according to claim 1, wherein the batter contains 1.4% to 6.4% of the cell structure material.

11. The manufacturing method according to claim 1, wherein the raw material A contains emulsified oil and fat.

12. The manufacturing method according to claim 1, wherein the step of obtaining the air bubble-containing substance is performed by mixing high pressure gas with the raw material A.

13. The manufacturing method according to claim 1, wherein the raw material A contains sugars.

14. The manufacturing method according to claim 1, wherein the raw material B contains one or more selected from the group consisting of grain flour and starch.

15. The manufacturing method according to claim 1, wherein the raw material B contains one or more selected from the group consisting of wheat flour, rice flour, soy flour, barley flour, and corn flour.

16. The manufacturing method according to claim 1, wherein the raw material B contains a leavening agent.

17. The manufacturing method according to claim 1, wherein a specific gravity of the resulting air bubble-containing substance is 0.2 to 0.6.

18. The manufacturing method according to claim 1, wherein the specific gravity of the obtained batter is 0.3 to 0.8.

19. Batter or a food product obtained by baking the batter, containing an effective amount of cell structure material for maintaining air bubbles, obtained by a manufacturing method comprising:
a step for obtaining an air bubble-containing substance by performing mixing a raw material A containing plant-based or animal-based milk or a processed product thereof so to cause the raw material A to contain gas; and
a step for obtaining batter by mixing a raw material B to the resulting air bubble-containing substance.

20. Batter, or a baked food product having uniform air bubbles obtained by baking the batter, which contains:
plant-based or animal-based milk or a processed product thereof,
cell structure material,
sugars,
flour, and
emulsified oil and fat.

21. The batter or the food product obtained by baking the batter according to claim 19 or 20, wherein
the milk or a processed product thereof is bean milk or cow's milk,
the cell structure material is one or more selected from the group consisting of bean pulp, bran, rice bran, and fruit fiber, and
the batter or the food product does not contain eggs.

## Amended claims

### Amended claims under Art. 19.1 PCT

**1.** A method for manufacturing batter or a food product obtained by baking the batter, the method comprising:
a step for obtaining an air bubble-containing substance by performing mixing a raw material A containing plant-based or animal-based milk or a processed product thereof so to cause the raw material A to contain gas; and
a step for obtaining batter by mixing a raw material B to the resulting air bubble-containing substance,
wherein at least one among the raw material A and the raw material B contains an effective amount of cell structure material for maintaining air bubbles,
wherein the amount of the cell structure material is 1.4% to 6.4% with respect to the total amount of the batter.

**2.** The manufacturing method according to claim 1, wherein the raw material A contains the effective amount of cell structure material for maintaining air bubbles.

**3.** The manufacturing method according to claim 1, wherein the milk or a processed product thereof is one or more selected from the group consisting of cow's milk, almond milk, rice milk, coconut milk, oat milk, and bean milk.

**4.** The manufacturing method according to claim 1, wherein the milk or a processed product thereof contains bean milk or cow's milk.

**5.** The manufacturing method according to claim 1, wherein the milk or a processed product thereof is bean milk produced from one or more selected from the group consisting of soybeans, peas, kidney beans, chickpeas, and adzuki beans.

**6.** The manufacturing method according to claim 1, wherein the milk or a processed product thereof contains a protein having air bubble stability.

**7.** The manufacturing method according to claim 1, wherein the cell structure material is one or more selected from the group consisting of bean pulp, bran, rice bran, and fruit fiber.

**8.** The manufacturing method according to claim 1, wherein the cell structure material is bean pulp produced from one or more selected from the group consisting of soybeans, peas, kidney beans, chickpeas and adzuki beans.

**9.** The manufacturing method according to claim 1, wherein the cell structure material is bran produced from one or more selected from the group consisting of wheat, barley, and oats.

**11.** The manufacturing method according to claim 1, wherein the raw material A contains emulsified oil and fat.

**12.** The manufacturing method according to claim 1, wherein the step of obtaining the air bubble-containing substance is performed by mixing high pressure gas with the raw material A.

**13.** The manufacturing method according to claim 1, wherein the raw material A contains sugars.

**14.** The manufacturing method according to claim 1, wherein the raw material B contains one or more selected from the group consisting of grain flour and starch.

**15.** The manufacturing method according to claim 1, wherein the raw material B contains one or more selected from the group consisting of wheat flour, rice flour, soy flour, barley flour, and corn flour.

**16.** The manufacturing method according to claim 1, wherein the raw material B contains a leavening agent.

**17.** The manufacturing method according to claim 1, wherein a specific gravity of the resulting air bubble-containing substance is 0.2 to 0.6.

**18.** The manufacturing method according to claim 1, wherein the specific gravity of the obtained batter is 0.3 to 0.8.

**19.** Batter or a food product obtained by baking the batter, containing an effective amount of cell structure material for maintaining air bubbles, wherein the amount of the cell structure material is 1.4% to 6.4% with respect to the total amount of the batter,
obtained by a manufacturing method comprising:
a step for obtaining an air bubble-containing substance by performing mixing a raw material A containing plant-based or animal-based milk or a processed product thereof so to cause the raw material A to contain gas; and
a step for obtaining batter by mixing a raw material B to the resulting air bubble-containing substance.

**20.** Batter, or a baked food product having uniform air bubbles obtained by baking the batter, which contains:
plant-based or animal-based milk or a processed product thereof,
cell structure material,
sugars,
flour, and
emulsified oil and fat,
wherein the amount of the cell structure material is 1.4% to 6.4% with respect to the total amount of the batter.

**21.** The batter or the food product obtained by baking the batter according to claim 19 or 20, wherein
the milk or a processed product thereof is bean milk or cow's milk,
the cell structure material is one or more selected from the group consisting of bean pulp, bran, rice bran, and fruit fiber, and
the batter or the food product does not contain eggs.
